# EUROPEAN PATENT APPLICATION

(11) **EP 1 826 697 A1**
(43) Date of publication of application: **29.08.2007**
(21) Application number: 06380035.3
(22) Date of filing: 24.02.2006
(51) Int. Cl.: G06F 21/00, G06F 21/24

(54) **Method for booting and using software for AWP and B type amusing gaming machines, and for C type casino machines**

(71) Applicant: Giga Games System, SL, 08173 Sant Cugat Del Vallès (ES)
(72) Inventor: Hernandez, Juan Lao, 08173 Sant Cugat Del Vallès (Barcelona) (ES)
(74) Representative: Gislon, Gabriele

(57) **Abstract**

It is applicable to machines with a dynamic kernel PC system and which use software relative to one main operating system, a games operating system (GOS) and some games programs, said method using:
- an external storage support that contains all the software,
-a reading unit suitable for reading the contents of the external storage support and supplying it to the PC system,
said method including accessing, by means of said reading unit, different layers of the software contained in the external storage support, grouped according to respective levels of security, said access causing a booting of the PC system, by downloading, into RAM, processing and subsequently running, the contents of each layer, until the complete software is downloaded into RAM, processed and run.

## Description

### Field of the invention

This invention relates generally to a method for booting and using software for AWP and B type amusing gaming machines (amusing machines with prizes) and for C type casino machines, and in particular to a method applicable to machines comprising a system with Dynamic Kernel PC technology and which, in order to function, need to run software relative to at least one main operating system, one games operating system (GOS) and one or more games programs, with the application of the proposed method offering approval requirements which are warranty of software integrity, as well as a software/hardware anti-cloning and a games software anti-copying protection.

### State of the art

Current machine approval requirements require 100% of the program running on the machine (the program/game memory) to be approved by Official Laboratories and submitted to the Game Commissions together with the machine project memory in order to obtain the approval number.

The machines currently use a ROM type EEPROM memory where 100% of the program resides, and owing to its nature, it cannot be altered once installed in the machine (although it can be reprogrammed externally). The reference used by the laboratories is currently the check-sum, while others use the CRC. The Laboratory and the Administration retain the software and a physical sample of the support installed in the machine containing the approved program: The memory has to be identified and its check-sum approved.

Their own supervision program checks the integrity of the memory that uses the program, and the machine is to be rendered inoperative in the event of any abnormality or alteration.

Another requirement to be fulfilled is that in the event of a power cut, the machine must be able to save the data unaltered so as to integrally maintain the state of the machine when power is restored, so that the program can re-start in the same state in which it was interrupted. At present a battery supplied RAM type memory and/or a non-volatile EEPROM type memory is used.

Another requirement to be fulfilled is that the counters controlling the "administration" have to be kept in a nonvolatile memory (they are maintained, even when there is no power supply), and normally they are kept in an EEPROM memory. The board containing the counters data is usually separated and sealed (bearing a physical indication of the manufacturer data as well as the machine and game identification). The manufacturer must be a registered counter manufacturer.

As well as the counters, the machine/game identification code is saved (No. of approval) and these are sequenced with a correlative number.

The counters register *inter alia* the data corresponding to the games played, the prizes paid in fractions of unit credit (0.2 Euro), on an accumulated basis and per natural year, up to six years.

The game program has to permanently control the existence of the counters board and its integrity, causing an out of service condition in the event the counters become disconnected or do not operate properly, making it impossible to continue the game. The administration counter data can be read independently via a specific serial port with password without altering the machine's operation.

Current game regulations in Spain and other countries, historically date back to a certain type of electronics which is still used today in roller machines, called static kernel XIP architectures (eXecute In Place), wherein the configuration of the operating system, the driver files and the applications form a unit containing the whole program that controls both the machine game and system and they are run directly from the program ROM, generally of a reduced size. The RAM on the other hand is only used for temporarily storing program variables and stacks, and therefore it is generally of a small size. To date this has been the typical model for embedded systems and specific aim systems.

With the use of PC systems, technology moved on to dynamic "kernel" models where the operating system is completely independent from the applications that it runs. In these systems the nonvolatile memory and massive storage devices contain the operating system and the applications (data, executable files, etc.) as loose, independent elements, normally structured within "file or module systems". As is known, the applications are not run directly from where they are located, as instead they are copied onto the RAM memory to be run. The operating system dynamically manages the use of memory, controls the communication between different IPC (inter-process-communication) applications, etc. It enables resources optimisation because said resources are assigned dynamically. It enables loading and partially or completely renewing applications in flight, even parts of the operating system. It permits a large degree of hardware abstraction.

In order to fulfil the above-mentioned approval requirements, there are proposals of machines with PC technology representing different alternatives, some of which are described in the following patents referenced herein as state of the art references: US-A-6149522, US-A-5643086, US-A-20020049909, WO-A-02/073501, US-A-20020052230.

Initially and in order to conform with current regulation, it is necessary to guarantee the security, integrity and authenticity of all the machine's software, which must be stored in an non-alterable ROM type memory, a copy of which is kept in the Laboratory.

According to these procedure, the Laboratory can have a copy of the ROM memory and the "Hash" value of the program, whereby, in following the current procedure, and extracting the ROM from any machine the administration can check its "Hash" value and compare it with that kept in the Laboratory by applying the same original Hash function. At present with the use of PC technology and the great and foreseeable need for information to be stored in video and multimedia machines, (several hundred megabytes) the solution with EEPROM type ROM memories is not sufficient, because owing to their nature, they have a reduced capacity (a few megabytes). Other solutions such as Compact Flash or hard disc drives do not directly include the read only requirements.

There are intermediate solutions where the program is distributed in various devices, but these are always less clearer for the laboratory and it is difficult to control the changes and therefore the overall integrity of the machine's game software. In these solutions, for example, it is normally necessary for one or two ROM memories (EEPROM type) to be provided to guarantee the integrity of certain parts of the software. Standard PCM 3840 or PCM 3810^{a} type hardware can be used, connected to bus PC104 where it can be assembled "disk-on-chip" and EEPROM memories. It is also possible to use another "disk-on-chip plus" application that allows partitions to be made with protected read and write areas and an "OTP" area. Nevertheless it is still a limited solution because of its memory capacity. As a reference the "white paper" by M-systems is quoted, entitled "Implementing Cost-Effective Security".

### Disclosure of the invention

In view of the gaps or deficiencies found in the state of the art, it appears necessary to offer an alternative thereto which can establish a method or system that guarantees to the Administration, via the official Laboratories, that the machine's approved program and system configuration can be checked to be still in operation.

This invention contributes to solving the problem raised when the new PC technologies are used in applications for AWP or B amusing games machines, or C type pure chance Casino machines, to fulfil the current game regulations that define a series of approval requirements for software integrity warranty, as well as the manufacturer needings for software/hardware anti-cloning and game software anti-copying protection.

Therefore this invention relates to a method for booting and using software for AWP and B type amusing gaming machines, and for C type Casino machines, such as those of pure chance, or general games machines, of those which comprise a system with Dynamic Kernel PC technology, or PC system, and which, in order to operate, need to run software relative to at least one main operating system, one games operating system, or GOS (Game Operating System) control application, and one or more games programs.

The method uses:
- an external storage support containing all the software required by the machine to operate, such as a CD or a DVD, and
- an unit for at least reading connected to said system with PC technology, such as a CD or DCD reader, and suitable for reading the contents of said external storage support, and supplying it to the system with PC technology,
said method comprising accessing, via said unit for at least reading, said external storage support, said access causing the PC system to boot up from the external storage support, by downloading, into at least one or more volatile storage devices, such as a RAM memory, processing and subsequently running the software contained in the external storage support, performing said booting by accessing different layers of the software contained in the external storage support, with said layers being grouped according to respective levels of security specific of each of said layers.

Said layers in which the information contained in the external storage support is structured, each contain the following information, protected with the following levels of security:
- first layer, or layer at least partially with a first level of security: part of the main operating system, such as Linux or Windows, at least referring to booting files for booting the PC system, and associated files,
- second layer, or layer at least partially with a second level of security: rest of a main operating system and associated files, and
- third layer, with:
   - a first information group, at least partially with a third level of security, containing: said GOS - games operating system, and one or more associated games programs, and
   - a second information group, at least partially with a fourth level of security, containing: resources to be used by said games programs.

The method comprises performing said booting according to the following steps:
a) overcoming said first level of security to at least:
   - access the contents of said first layer and download it into at least said RAM memory, and
   - make it possible to access said second layer,
b) overcoming said second level of security to at least:
   - access the contents of said second layer and download it into at least said RAM memory; and
   - make it possible to access said third layer,
c) overcoming said third level of security to at least access the contents of said first information group with said third level of security and download it into at least said RAM memory, and
d) overcoming said fourth level of security to at least access the contents of said second information group with said fourth level of security and download it into at least said RAM memory,
said steps c) and d) being performed simultaneously or sequentially, in any order, since the information accessed upon carrying out the overcoming of said steps c) and d) is contained in one and the same layer, the third, but with different levels of security.

In one embodiment all the contents of said layers are protected with different levels of security, but in another embodiment part of said contents is not protected, such as a series of associated files. Anyway and although for said embodiment with part of the contents not protected it is possible to access said non-protected files without having to overcome the level of security of the layer on which they are arranged (but it is necessary to overcome the security level of the previous layer), by overcoming said level of security it is possible to access all the contents of the layer protected by said level, downloading it all into the RAM memory, even that which was not protected.

Once all the software has been downloaded into the RAM memory, it is not necessary to access the external storage support, until the PC system is booted again or re-started.

By using said external storage support to store all the software it fulfils the requirements of providing a single, non-alterable physical support or container for all the software, so as to guarantee the integrity of the software of the whole machine, since for any booting or starting-up of the machine, and therefore of the PC system, it is necessary to have the contents of said CD or DVD in particular, with the information grouped as described with its respective and specific levels of security, which the PC system, as will be explained below, is adapted to overcome, therefore performing a "self-test" on the integrity of the software each time the machine is started-up.

Preferably said levels of security are grouped from lesser to greater security, with the first level of security being the least, and the fourth level of security being the greatest, and they refer to respective levels of at least encryption.

According to the method proposed by this invention, the first level of encryption comprises using a public encryption algorithm, carrying out the overcoming of said step a) by means of a corresponding decryption, by the PC system, using a kernel contained in the external storage support, which knows a key used by said public encryption algorithm, and with the overcoming of said first level of encryption causing said booting files and associated files to be downloaded into at least said RAM memory, and subsequently processed and run, which makes possible said access to the second layer.

As for the second level of encryption, this comprises using two public encryption algorithms, carrying out the overcoming of said step b), according to the proposed method, by means of a corresponding decryption, by the PC system, using two respective keys, used by said two public encryption algorithms, accessed by the PC system when overcoming said first level of encryption of said step a), and with the overcoming of said second encryption level causing the rest of the main operating system and associated files to be downloaded into at least said at least one volatile storage device, and subsequently processed and run, which makes possible said access to the third layer.

The PC system accesses said keys of said two public encryption algorithms, preferably by processing and running said booting and associated files, which form a booting system that knows said two keys, which the PC system accesses when said booting system is initiated.

As mentioned above, once said second level of security of the second layer has been overcome, the third layer is accessed, which contains said first and second information groups, with said third and fourth levels of security, respectively, which are described below.

As for the third level of at least encryption, this comprises using two public encryption algorithms and an algorithm based on an electronic security key, carrying out the overcoming of said step c), according to the proposed method, by means of a corresponding decryption, by the PC system, using at least two respective keys, used by said two public encryption algorithms, with said two keys being at least partially known, produced and/or acquired by the PC system, and by means of the connexion of said electronic security key to said PC system, with the overcoming of said third encryption level causing said GOS games operating system and said associated games programs to be downloaded, into at least said RAM memory, and subsequently processed and run.

Preferably at least part of one of said at least two keys used to decrypt, at least partially, said third encryption level, is acquired by the PC system when accessing an interface board connected thereto.

In order to access said interface board, or control interface board, and acquire said key, or part thereof, the proposed method includes, once the PC system has established communication with the interface board, carrying out a verification, or crossed identification, using at least respective security keys, one of which is recorded in the external storage support and the other in a storage device of the interface board (such as a ROM memory), making it possible to access said interface board to acquire said key to be used to perform said steps c) and d), only if said verification is successful.

Said successful verification will only be produced, preferably, for one single board. In other words if said board is changed for another the verification would fail, preventing the PC system from accessing the interface board, and therefore said key, or part thereof, whereby it would not be able to overcome the third encryption level.

In a preferred embodiment, according to the proposed method, the key to be used with a first of said two public encryption algorithms of the third encryption level, is made up partially by the one extracted from the interface board and partially by a pseudorandom key produced by the PC system, and the key of the other public encryption algorithm, or second algorithm, is obtained by encoding the key used by the first public encryption algorithm, with the electronic key.

The method proposes that in order to perform one or more of the decryption processes described, it is necessary to carry out various checks to make sure that all is as it should be in the system, in other words, that nobody has changed any component, etc., such as the above-described interface board verification.

As for said electronic security key, this is a hardware device connected to a port of said PC system, such as a parallel or USB port, in order to decrypt the algorithm based on said electronic key.

For part of the contents of the first information group in the third layer, the third level of security refers not only to the third encryption level described above, but also to an obfuscation process. In particular, the proposed method includes applying said obfuscation process to some binary files (such as "jar" files) contained in said GOS games operating system, which in turn contain at least classes of said games programs, carrying out the overcoming of said step c) by also a corresponding overcoming of said obfuscation process, by the PC system.

As for the fourth encryption level, this comprises, in addition to the same requirements as the third security level, a secret encryption algorithm, carrying out the overcoming of said step d), in addition to by means of the decryption used to overcome the third level of security, by means of a corresponding decryption of said secret encryption algorithm, by the PC system, which knows the secret encryption algorithm, that preferably includes an alphabet transformation, and with the overcoming of the fourth encryption level causing part or all of the resources to be used by said games programs to be downloaded.

Returning to the contents of the second layer, in particular the files associated with the main operating system downloaded after overcoming said second encryption level of step b), at least part of said files are driver files which make it possible for the PC system to communicate with said interface board and with said electronic key, essential requirements for being able to perform said steps c) and d), and therefore access the contents of the third layer by overcoming its security levels.

All the steps of the proposed method are applicable to starting-up any machines with a PC system that does not have a local, nonvolatile storage unit, such as a hard disc drive, with all the software being loaded into the RAM memory (or memories) as explained, in an initial booting, and said software being kept in the RAM memory until the machine, and therefore the PC system, is disconnected, causing a future connection that all the steps of the proposed method are reapplied, leading to downloading the software contained in the external storage support, again into the RAM memory.

However, the method can also be applied to a PC system connected to a local, nonvolatile storage unit, such as said hard disc drive, in which case part of said software download into the RAM memory does not take place directly, since beforehand it passes via the hard disc. In particular, the proposed method comprises, for downloading said part or all of the resources to be used by said games programs into said RAM memory, performing a prior download of at least part of said resources, from the third layer of the external storage support, onto said hard disc (or other local, nonvolatile storage device), and from the hard disc to the RAM memory.

Said prior downloading onto said hard disc is performed in two different ways, depending on the embodiment.

In a first embodiment concerning said prior downloading onto the hard disc, the method comprises:
- checking that the hard disc is prepared for working with the version located in the external storage support, by comparing an identifier located in the external storage support and another one located in the hard disc, and:
   i) if the comparison is successful, checking whether the game resources have already been copied onto the hard disc, and if not, then proceeding to copy them, to be subsequently loaded, at least partially, into the RAM memory, processed and used by running the game, or games, associated with said resources, or
   ii) if the hard disc does not have said identifier or the identifier does not coincide with that of the external storage support, formatting the hard disc, either automatically or via user intervention, said formatting including an identifier which does coincide with that of the external storage support, after which step i) is performed.

In a second embodiment concerning said prior downloading onto the hard disc, the method comprises:
- erasing the contents of the hard disc,
- copying onto said hard disc the resources associated with the various games found in the external storage support, and
- loading into the RAM memory, at least part of said resources copied onto the hard disc, to be subsequently processed and used by running the game, or games, associated with said resources.

The method also comprises, prior to using said external storage support containing all the software required by the machine to operate, generating said software and storing it in the external storage support structured in said three layers and with said four security levels.

### Brief description of the drawings

The above-mentioned and others advantages and characteristics will be more fully understood from the following detailed description of some embodiments, some of which refer to the attached drawing, and which must be considered in an illustrative, non-limiting way, where:

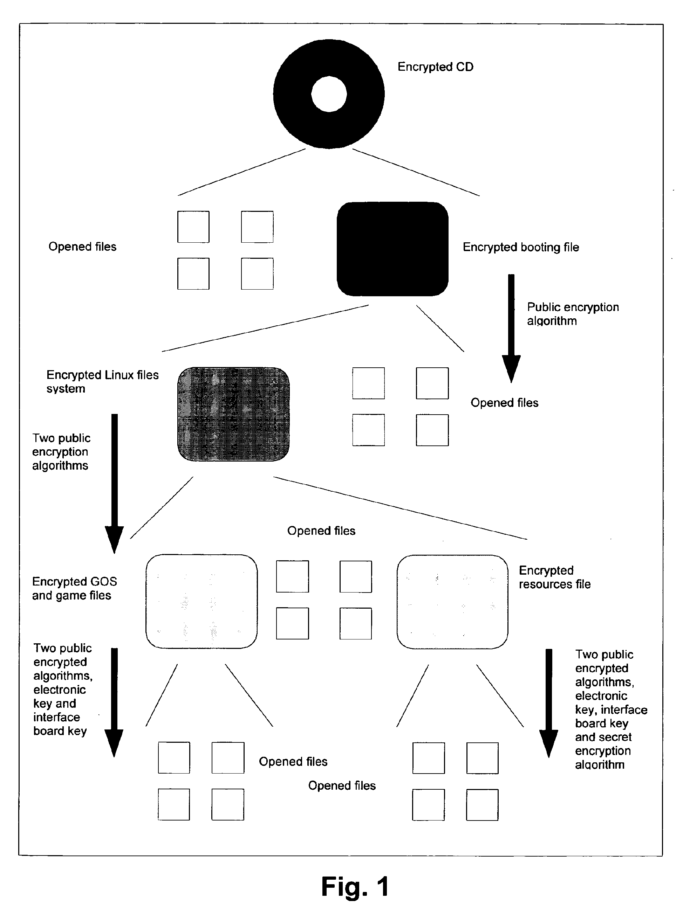

Fig. 1 is a schematic diagram representing the steps of the method proposed for an embodiment.

### Detailed description of some embodiments

The embodiment illustrated in Fig. 1 details the proposed method starting with the disc (CD or DVD) shown in the top of Fig. 1, as the described external storage support, which contains all the software to be used by the machine.

Said Fig. 1 represents both the contents of the various layers according to which the disc information is structured, and the actions to be performed to access said contents, in other words to overcome the various security levels, which are to be read sequentially from top to bottom according to Fig. 1, with said actions, and therefore the access to the various layers, and the disc and its various contents, being indicated in Fig. 1 by words and phrases, which meaning must be taken as indicative thereof.

As for the symbols shown in said Fig. 1, the squares with rounded corners refer to "encrypted" elements, and the squares that are smaller than the previously mentioned ones refer to open files, in other words to the contents once the corresponding encryption levels have been overcome.

It can be seen how in the illustrated embodiment, first of all the first layer of the disc is accessed, made up of non-encrypted files as well as of a booting file encrypted with the first security level that has already been explained, obtained by encryption with a public algorithm, which overcoming enables said booting file to be accessed and run, and also to access the second layer.

The second layer is made up, in the embodiment illustrated in Fig. 1, of a series of files opened when overcoming the first security level, as well as a series of files making up the rest of the main operating system, in this case Linux, protected with the second security level that has already been explained, obtained by encryption with two public algorithms, which overcoming enables said Linux files to be accessed and run, and access the third layer.

The third layer is made up, in the embodiment illustrated in Fig. 1, by a series of files opened when overcoming the second security level, as well as:
- the first information group made up of the GOS operating system or file and, one or more games programs, protected by the third security level, obtained by the encryption with two public algorithms, an electronic key and the key, or part of a key, obtained when accessing the interface board, and
- the second information group made up of a resources file to be used by said games program or programs, protected by the fourth security level, which also includes using said secret algorithm which is aimed at making cryptanalysis tasks difficult for a possible hacker, and which also includes transposing the alphabet (table of equivalences between characters) to make cryptanalysis more difficult.

Overcoming the third security level permits access to the GOS operating system, and overcoming the fourth level permits access to the games resources.

As explained in a previous section, all the accessed contents are downloaded into RAM, and remain there until the machine is switched off.

Also mentioned in a previous section was the possibility that the third security level includes applying a process of obfuscation to some binary files contained in said GOS games operating system, which contain in turn at least classes of said games programs. The aim of said process is to prevent the source code being readable by using inverse engineering (passing from compiled binary code to source code).

As for the encryption of the resources of the fourth security level, if several of these exist, in the form of different files, in one embodiment, it may be that the complete fourth security level is not applied to all the files, but part of it, according to the embodiment for which, depending on the size of the file, only one of the algorithms or all three will be used, as indicated below:
- Small size files are only encrypted with the electronic key.
- The larger files are encrypted using the three encryption algorithms mentioned above as follows:
   - The first bytes of the file are encrypted with the electronic key.
   - The following bytes plus a "padding" of bytes are encrypted with a secret algorithm.
   - The rest of the file is encrypted with a public algorithm.

Examples of public algorithms used include "Twofish", "Blowfish" and "Xor key", or any of those included in the encryption API of Linux kernel, and an example of electronic key is a "Hasp" key.

As explained above, the proposed method is applicable in machines with a PC system without a hard disc drive, and in those that have access to a hard disc drive.

The steps to follow in each case are detailed below, in a series of embodiments, which complement the more general explanation given in the section entitled "disclosure of the invention".

### Without a hard disc drive:

A description is provided below of the booting process that is the object of the invention for a machine that does not have a hard disc drive in the computer.
1. When switching on the machine, the system boots from the external storage support, in this case a read only device (CD-ROM or DVD).
2. The PC system loads the Operating System (Linux or Windows) from said external support, or removable unit (CD) as well as all the drivers needed to configure the computer's RAM memory environment.
3. A virtual disc is created in RAM that will contain the reading and writing directories that the Operating System uses to operate. These directories in Linux are /var, /tmp, /etc, etc.
4. The booting scripts of said GOS operating system are launched from the removable unit (CD), and in this way the application is launched. From here it is the GOS application that takes over control of the system.
5. Also from the removable unit (CD) the games and resources associated with the various games are loaded into the computer's RAM memory.
6. GOS determines the active game and runs it.
7. Once all the programs and files have been downloaded, the CD or DVD ceases to act and the computer keeps operating with everything loaded into RAM until the computer is disconnected.

This process will be repeated each time the machine is started-up since the computer's RAM looses all its data when it is disconnected.

As for applying the method in a machine including a hard disc drive, the first and second embodiments described above are contemplated, and a more detailed description is provided below:

### First embodiment with hard disc drive:

1. When switching on the machine the system boots from the read only device (CD-ROM o DVD).
2. The computer loads the Operating System from the removable unit (CD) as well as the drivers needed to configure the environment.
3. A virtual disc is created in RAM that will contain the reading and writing directories that the Operating System uses to operate. These directories in Linux are /var, /tmp, /etc...
4. The GOS booting scripts are launched from the removable unit (CD), and in this way the application is launched. From here it is the GOS application that takes control..
5. The games are loaded into the computer's RAM memory.
6. The hard disc is to be checked to ensure it is prepared for working with the version located in the removable unit (CD). This check is carried out taking into account an identifier located in the CD and another one located in the hard disc.
   - If the hard disc does not have this identifier (new hard disc) or the identifier does not coincide with that on the CD, the hard disc will be formatted automatically (with said formatting including the inclusion of said identifier), and subsequently the hard disc will be checked again to see whether it has said identifier.
   - If the identifier corresponds, the system moves on to check whether the games resources have already been copied onto the hard disc, if not, they are copied now.
7. The resources associated with the various games are loaded from the hard disc onto the computer's RAM memory.
8. GOS determines the active game and runs it.

Second embodiment with hard disc drive:
1. When switching on the machine the system boots from the read only device (CD-ROM or DVD).
2. The computer loads the Operating System from the removable unit (CD) as well as all the drivers needed to configure the environment.
3. A virtual disc is created in RAM that will contain the reading and writing directories that the Operating System uses to operate. These directories in Linux are /var, /tmp, /etc...
4. The GOS booting scripts are launched from the removable unit (CD), and in this way the application is launched. From here it is the application (GOS) that takes control.
5. The games are loaded into the computer's RAM memory.
6. The hard disc contents are erased.
7. All the resources associated with the various games located in the removable unit (CD) are copied onto the hard disc.
8. A large part of the resources associated with the various games are loaded from the hard disc into the computer's RAM memory.
9. GOS determines the active game and runs it.

A low priority "thread" arrangement is proposed which will be responsible for preparing the resources that the PC system is going to need and which may not have been loaded in point 8 from the hard disc onto memory, in order to be loaded into video memory when necessary.

Applying the proposed method in the embodiments relating to a PC system with hard disc drive, has the only advantage that subsequent bootings after the first booting are a little bit quicker.

The proposed method also comprises, in order to guarantee the integrity of the software as mentioned above, so as to fulfil current regulations, checking said integrity by means of an algorithm based on Hash, in particular the MD5 algorithm.

The MD5 is an algorithm based on Hash. From an input file a number is obtained with many figures, which is generally called "its MD5". The algorithm is so complex that it ensures that any small modification made to the original file will cause all the figures in its MD5 to be modified, in other words there is no way to make "smart" modifications to the file which end up obtaining the same MD5 value.

For this reason the method includes applying said MD5 algorithm to some or all of the files contained in the external storage support, such as a CD, to obtain their "MD5 values", and to generate an additional CD with said MD5 values grouped in a file, as well as an application that checks that the MD5 values registered in said additional CD coincide with those obtained when applying the MD5 algorithm on the files of the CD containing the game or games.

The method comprises submitting both CDs to the various administrative bodies in charge of verifying the integrity of the software, allowing them to ensure that he game CD available on the street, in other words, which is used in the machine, has not been manipulated in any way. This additional CD enables the administrative bodies to carry out said verification by means of inspections of this type.

A person skilled in the art could introduce changes and modifications to the described embodiments without departing from the scope of the invention as defined in the attached claims.

## Claims

1. Method for booting and using software for AWP and B type amusing gaming machines, and for C type casino machines, of those which comprise at least one system with dynamic kernel PC technology, or PC system, and which in order to function need to run software relative to at least one main operating system, to one games operating system (GOS) and to one or more games programs, said method using:
- an external storage support containing all the software that the machine needs to operate,
- a unit for at least reading connected to said system with PC technology, and suitable for reading the contents of said external storage support, and supplying it to the system with PC technology,
said method comprising accessing, by means of said unit for at least reading, said external storage support, with said access causing the PC system to boot up from the external storage support, by downloading, into at least one or more volatile storage devices, processing and subsequently running, the software contained in the external storage support, said booting being performed by accessing various layers of the software contained in the external storage support, said layers being grouped according to respective levels of security specific of each of said layers.

2. Method according to claim 1, **characterised in that** said layers each contain the following information, protected with the following security levels:
- first layer, or layer at least partially with a first level of security: part of the main operating system, at least referring to booting files for booting the PC system, and associated files,
- second layer, or layer at least partially with a second level of security: rest of a main operating system and associated files, and
- third layer, with:
- a first information group, at least partially with a third level of security, containing: said games operating system (GOS), and one or more associated games programs, and
- a second information group, at least partially with a fourth level of security, containing: resources to be used by said games programs.

3. Method according to claim 2, **characterised in that** it comprises performing said booting according to the following steps:
a) overcoming said first level of security to at least:
- access the contents of said first layer and download it into at least said at least one volatile storage device, and
- make it possible to access said second layer,
b) overcoming said second level of security to at least:
- access the contents of said second layer and download it into at least said at least one volatile storage device; and
- make it possible to access said third layer,
c) overcoming said third level of security to at least access the contents of said first information group with said third level of security and download it into at least said at least one volatile storage device, and
d) overcoming said fourth level of security to at least access the contents of said second information group with said fourth level of security and download it into at least said at least one volatile storage device,
said steps c) and d) being performed simultaneously or sequentially, in any order.

4. Method according to claim 3, **characterised in that** said levels of security are grouped from lesser to greater security, with the first level of security being the least, and the fourth level of security being the greatest.

5. Method according to claim 3, **characterised in that** said levels of security refer to respective levels of at least encryption.

6. Method according to claim 5, **characterised in that** the first encryption level comprises using a public encryption algorithm, carrying out said overcoming of said step a) by means of a corresponding decryption, by the PC system, using a kernel contained in the external storage support, which knows a key used by said public encryption algorithm, and with said overcoming of the first level of encryption causing said booting files and associated files to be downloaded into at least said at least one volatile storage device, and subsequently processed and run, which makes possible said access to the second layer.

7. Method according to claim 6, **characterised in that** the second level of encryption comprises using two public encryption algorithms, carrying out said overcoming of said step b) by means of a corresponding decryption, by the PC system, using two respective keys, used by said two public encryption algorithms, accessed by the PC system when overcoming said first level of encryption of said step a), and with the overcoming of said second encryption level causing the rest of the main operating system and associated files to be downloaded into at least said at least one volatile storage device, and subsequently processed and run, which makes possible said access to the third layer.

8. Method according to claim 7, **characterised in that** the third level of encryption comprises using two public encryption algorithms and one algorithm based on an electronic security key, carrying out said overcoming of said step c) by means of a corresponding decryption, by the PC system, using at least two respective keys, used by said two public encryption algorithms, with said two keys being at least in part known, produced and/or acquired by the PC system, and connecting said electronic security key to said PC system, with the overcoming of said third encryption level causing said games operating system (GOS) and said associated games programs to be downloaded, into at least said at least one volatile storage device, and subsequently processed and run.

9. Method according to claim 8, **characterised in that** at least part of one of said at least two keys used to decrypt, at least partially, said third level of encryption, is acquired by the PC system when accessing an interface board connected thereto.

10. Method according to claim 9, **characterised in that** said electronic security key is a hardware device connected to a port of said PC system, to decrypt the algorithm based on said electronic key.

11. Method according to claim 8, **characterised in that** said games operating system (GOS) contains some binary files which, in turn, contain at least classes of said games programs, the third level of security comprising as well as said encryption used by the third encryption level, using an obfuscation process for said binary files, carrying out said overcoming of said step c) by a corresponding overcoming of said obfuscation process, by the PC system.

12. Method according to claim 8, 9 or 10, **characterised in that** the fourth level of encryption comprises the same requirements as the third security level plus a secret encryption algorithm, carrying out the overcoming of said step d) as well as by means of the decryption used to overcome the third level of security, by a corresponding decryption of said secret encryption algorithm, by the PC system, which knows the secret encryption algorithm, and with said overcoming of the fourth encryption level causing part or all of the resources to be used by said games programs to be downloaded into said at least one volatile storage device, and subsequently processed and run.

13. Method according to claim 12, **characterised in that** using said secret encryption algorithm includes an alphabet transformation.

14. Method according to claim 9, 10 or 12, **characterised in that** part of said files associated with the main operating system downloaded after said overcoming of said second encryption level of step b), are driver files that make it possible for the PC system to communicate with said interface board and with said electronic key to be able to perform said steps c) and d).

15. Method according to claim 14, **characterised in that** it comprises, once the PC system has established communication with the interface board, carrying out a verification or crossed identification, using at least respective security keys, one of which is recorded in the external storage support and the other one in a storage device of the interface board, making it possible to access said interface board to acquire said key to be used to perform said steps c) and d), only if said verification is successful.

16. Method according to any claim from 2 to 15, **characterised in that**, in the event that the PC system is connected to a local, nonvolatile storage unit, to carry out said downloading of part or all of the resources to be used by said games programs into at least said volatile storage device, the method comprises performing a prior download of at least part of said resources, from the third layer of the external storage support, into said local, nonvolatile storage unit, and from the latter to said at least one volatile storage device.

17. Method according to claim 16, **characterised in that** in order to perform said prior download into said local, nonvolatile storage unit, the method comprises:
- checking that the local, nonvolatile storage unit is prepared for working with the version located in the external storage support, by comparing an identifier located in the external storage support and another one located in the local, nonvolatile storage unit, and:
i) if the comparison is successful, checking whether the game resources have already been copied onto the local, nonvolatile storage unit, and if not, then proceeding to copy them, to be subsequently loaded, at least partially, into the at least one volatile storage device, processed and used by running the game, or games, associated with said resources, or
ii) if the local, nonvolatile storage unit does not have said identifier or the identifier does not coincide with that of the external storage support, formatting the local, nonvolatile storage unit, said formatting including an identifier which does coincide with that of the external storage support, after which step i) is performed.

18. Method according to claim 17, **characterised in that** said formatting of said step ii) is performed automatically.

19. Method according to claim 17, **characterised in that** said formatting of said step ii) is performed with user intervention.

20. Method according to claim 16, **characterised in that** in order to perform said prior download into said local, nonvolatile storage unit, the method comprises:
- erasing the contents of the local, nonvolatile storage unit,
- copying onto said local, nonvolatile storage unit the resources associated with the various games found in the external storage support, and
- loading into the at least one volatile storage device, at least part of said resources copied onto said local, nonvolatile storage unit, to be subsequently processed and used when running the game, or games, associated with said resources.

21. Method according to any of the claims 1 to 15, **characterised in that** it comprises prior to using said external storage support containing all the software needed by the machine to operate, producing said software and storing it in the external storage support structured according to said three layers and with said four levels of security.
